# EUROPEAN PATENT APPLICATION

(11) **EP 2 816 774 A1**
(43) Date of publication of application: **24.12.2014**
(21) Application number: 13305812.3
(22) Date of filing: 17.06.2013
(51) Int. Cl.: H04L 29/06

(54) **System for enforcing privacy policies in a telecommunication network**

(71) Applicant: ALCATEL LUCENT, 92100 Boulogne-Billancourt (FR)
(72) Inventor: Betge-Brezetz, Stéphane, 91620 NOZAY (FR); Verchere, Dominique, 91620 NOZAY (FR); Dupont, Marie-Pascale, 91620 NOZAY (FR); Kamga, Guy-Bertrand, 91620 NOZAY (FR)
(74) Representative: Mouney, Jérôme

(57) **Abstract**

For enforcing privacy policy related to sensitive data that are stored in a device (CD) and are to be sent to a destination device within a telecommunication network (TN), the device (CD) sends a request (Req) to a controlling node (CN), the request containing an identifier of the destination device and the privacy policy associated with the sensitive data to be sent, and receives a response (Res) sent from the controlling node, the response containing information on a path to a network node able to transmit sensitive data to the destination device, the path satisfying the privacy policy.

## Description

### FIELD OF THE INVENTION

The present invention pertains to the control of action on data in telecommunication networks by means of privacy policies enforcement. More particularly, the invention relates to a system for controlling the transport of processing sensitive data associated with privacy policies in a telecommunication network.

### BACKGROUND

Data protection is still among the main barriers for the large scale adoption of cloud technologies by enterprises. Indeed, due to security and privacy issues, the enterprises are still hesitant to put their sensitive data in the cloud infrastructure, even for a time-bound project. In order to get the full benefit of the huge cloud computing market, there is therefore a need to provide control mechanisms to keep privacy & confidentiality of the sensitive data stored in the cloud all along their lifecycle (creation, processing, transfer, deletion).

Beyond the control that can be done at an extremity, like a virtual machine, there is a particular need to control the sensitive data when they are transported between the virtual machines within the cloud network (or even between different clouds). This data flow should cross the network infrastructure in accordance to various security and privacy policies that can be assigned to each sensitive data.

For security and privacy purposes, it is indeed mandatory to control the way the data flow is exchanged between virtual machines. It should allow to prevent the risk that this flow can be observed and analyzed by an attacker who may jeopardize the business of the company.

This risk is still present even if the data are encrypted during their transport. Indeed, by knowing a traffic (or the increase of a traffic) between virtual machines, it may give some indications about the activity of the companies holding these virtual machines (for instance, this may give indication of commercial exchanges, or possible on-going/future merge between these companies).

Also, regarding regulation, although the Cloud Service Provider has currently no regulatory responsibility, it has however to provide the cloud user with the necessary features and technologies allowing the protection of the cloud user sensitive data within his Cloud infrastructure in order to comply with the contractual obligations required by the cloud user.

Therefore, there is a need to control the flow of sensitive data crossing the cloud network infrastructure, when exchanged between virtual machines. This control should be done in order to support various security and privacy policies (coming from the enterprise itself or from regulations) that need to be enforced on the transportation of the sensitive data.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for for enforcing privacy policy related to sensitive data that are stored in a device and are to be sent to a destination device within a telecommunication network, the method comprising the following steps in said device:
sending a request to a controlling node, the request containing an identifier of the destination device and the privacy policy associated with the sensitive data to be sent,
receiving a response sent from the controlling node, the response containing information on a path to a network node able to transmit sensitive data to the destination device, the path satisfying the privacy policy.

Advantageously, the invention offers a system allowing to use the privacy policy (related to the sensitive data) to automatically configure a compliant path within the cloud networks to transport these data (and perform the necessary tracing if requested).

In an embodiment, the controlling node is included in the network node.

In an embodiment, the controlling node determines the path to the destination device based on the privacy policy and the identifier of the destination device.

In an embodiment, the path includes one of a port and an address of the network node, and a protocol to be used.

In an embodiment, the identifier of the destination device is an address of the destination device.

In an embodiment, the privacy policy describes constraints about the transport of the sensitive data.

In an embodiment, the device sends the sensitive data to the network node according to the path satisfying the privacy policy.

In an embodiment, the device keeps information about the sensitive data and the corresponding path to be used for sending the sensitive data and is able to check whether sensitive data are sent to a path according to the privacy policy associated with the sensitive data.

In an embodiment, the controlling node negotiates the privacy policy if the privacy policy cannot be completely satisfied by the network node.

In an embodiment, the request is forwarded from the controlling node to another controlling node, the controlling node receiving another response from said another controlling node containing information on a path to another network node able to transmit sensitive data to the destination device, the path satisfying the privacy policy.

In an embodiment, the controlling node selects the path in predefined paths composing a Path Configuration Plan

By provisioning the network nodes and the devices jointly with compliant privacy parameters, the privacy is preserved for the data flows exchanged between virtual machines through the cloud network infrastructure. Moreover, if requested in the privacy policy, the invention allows to keep a trace of the data transfer and of the used path so that latter analysis and audit may be carried out (for instance in case of privacy data breach). It is also insured that privacy policies are resilient to topology changes of the cloud network due to e.g. an additional virtual machine creation, a virtual machine migration from one server to another server hosts and the termination of one or several virtual machines on the host servers.

For instance, a policy should state the traffic between two different virtual machines should not go outside of a given area/country. Or another policy should state the traffic between two different virtual machines should not cross a forbidden area/country or a forbidden transport operator.

Additionally, the devices can be physical devices or virtual machines, the invention enabling to check privacy policies for the transport of sensitive data in a cloud infrastructure.

The invention also pertains to a method enforcing privacy policy related to sensitive data that are stored in a device and are to be sent to a destination device within a telecommunication network, the method comprising the following steps in a controlling node :
receiving a request sent from the device, the request containing an identifier of the destination device and the privacy policy associated with the sensitive data to be sent,
sending a response to the device, the response containing information on a path to a network node able to transmit sensitive data to the destination device, the path satisfying the privacy policy.

The invention also pertains to a device for enforcing privacy policy related to sensitive data that are stored in the device and are to be sent to a destination device within a telecommunication network, the device comprising:
means for sending a request to a controlling node, the request containing an identifier of the destination device and the privacy policy associated with the sensitive data to be sent,
means for receiving a response sent from the controlling node, the response containing information on a path to a network node able to transmit sensitive data to the destination device, the path satisfying the privacy policy.

The invention also pertains to a controlling node for enforcing privacy policy related to sensitive data that are stored in a device and are to be sent to a destination device within a telecommunication network, the controlling node comprising:
means for receiving a request sent from the device, the request containing an identifier of the destination device and the privacy policy associated with the sensitive data to be sent,
means for sending a response to the device, the response containing information on a path to a network node able to transmit sensitive data to the destination device, the path satisfying the privacy policy.

The invention also pertains to computer programs capable of being implemented within a device and a controlling node, said programs comprising instructions which, when the programs are executed within said device and controlling node, carry out steps of the method according to the invention.

### BRIEF DESCRIPTION OF THE FIGURES

The present invention and the benefits thereof shall be better understood upon examining the description below, which makes reference to the attached figures, in which:
- FIG. 1 is a schematic block diagram of a communication system according to one embodiment of the invention for enforcing privacy policies associated with sensitive data; and
- FIG. 2 is an algorithm of a method for enforcing privacy policies associated with sensitive data according to one embodiment of the invention.

The same reference number represents the same element or the same type of element on all drawings.

### DESCRIPTION OF EMBODIMENTS

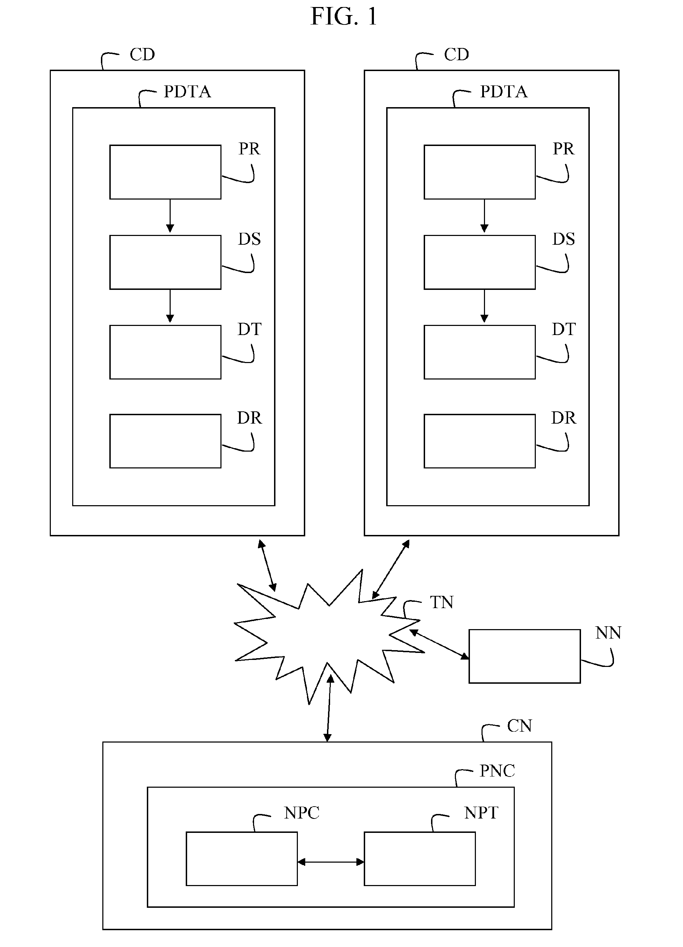

With reference to FIG. 1, a communication system according to the invention comprises a telecommunication network TN, controlling device CD controlling nodes CN and network nodes NN able to communicate between them through the telecommunication network.

In order to not encumber FIG. 1, only one controlling node CN is represented and only two controlling devices CD are represented.

The telecommunication network TN may be a wired or wireless network, or a combination of wired and wireless networks.

The telecommunication network TN can be a packet network, for example, an IP ("Internet Protocol") high-speed network such as the Internet or an intranet, or even a company-specific private network.

As an introduction, a few terms and concepts that are helpful for understanding the invention are defined below.

The invention aims at offering a method for enforcing privacy policies associated with sensitive data in devices like servers and network nodes (aka network equipment) of a telecommunication network.

Sensitive data are, for instance, stored in a server of the cloud storage system. Sensitive data are associated with privacy policies describing for example how this sensitive data can be accessed and processed within the server and constraints about the transport of the sensitive data. Privacy policies to be enforced may, for instance, include regulatory policies depending on the country where the owner of the said sensitive data is located, enterprise policies and/or individual policies.

In a preferred embodiment, sensitive data are encrypted. In a more preferred embodiment, the encrypted sensitive data are encapsulated into an encrypted file. Such an encrypted file is named Privacy Data Envelope. As previously mentioned, Privacy Data Envelopes are described in detail in the article "Privacy Data Envelop: Concept and Implementation", Proc. Conf. on privacy, Security and Trust, PST 2011, Montreal, Canada, 2011.

A controlling device CD can be a server deployed at the end-points of the telecommunication network. The controlling device is able to store and process data.

For example, a controlling device is a physical machine like a server or is a virtual machine implements a virtual machine.

A controlling device CD comprises a privacy data transport agent PDTA that is in charge of sending and receiving sensitive data according to specified privacy policies.

The privacy data transport agent PDTA comprises a path requestor PR, a data sender DS, a data tracer DT and a data receiver DR.

The path requestor PR is able to request a path satisfying a privacy policy to a controlling node. It is assumed that the controlling device knows the address of the controlling node. For example, the controlling device implements a virtual machine owned by a client of the operator of the telecommunication network managing the controlling nodes. For example, the privacy data transport agent PDTA was initially configured with the address of the controlling node or an address where it can ask this information.

The path requestor PR obtains from the controlling node a path satisfying the privacy policy. According to the element which the policy is attached to, the path requestor can be executed at the launching of a virtual machine implemented in the controlling device, for example if the policy is attached to the virtual machine, or at each file transfer, for example if the policy is attached to the file. In addition, the path requestor PR can negotiate the path if the privacy policy cannot be completely satisfied (for instance data to be sent can be delayed until a path verifying the privacy constraints expressed by the path requestor PR will become available).

The data sender DS is able to send the data to the right address and the right port, i.e. corresponding to the path satisfying the privacy policy, obtained by the path requestor PR.

The data tracer DT is able to keep information about the data and the path used for transferring and receiving the data requiring transfer tracing.

The tracing can be used to ensure that sensitive data were not sent toward an element that violates privacy policies associated with the sensitive data.

The data receiver DR is able to receive the data sent by a data sender of another controlling device and can optionally check whether the data come from an appropriate path according to the privacy policy related to the data.

A controlling node CN comprises a privacy node controller PNC that is in charge of ensuring that the data will be transported within the telecommunication network according to specified privacy policies (e.g. avoiding forbidden areas/countries and/or operators, crossing only secure-enough nodes). The controlling nodes are deployed in the telecommunication network and are accessible by at least at the edge (ingress, egress) nodes of the telecommunication network. For example, the controlling nodes can be implemented in servers or routers.

The privacy node controller PNC comprises a node path computer NPC and a node path tracer NPT.

The node path computer NPC is able to find a path satisfying the privacy policy and return a port to which the data have to be sent, at the request of a controlling device CD or another controlling node CN. Two ways are possible to find this path: on-the-fly computation or selection in predefined paths composing a Path Configuration Plan. For example with a Path Configuration Plan, the paths are predefined and one predefined path satisfying privacy policy can be selected. On-the-fly computation can be used in a case of a set of privacy node controllers or in a case of only one privacy node controller. If a new path is obtained by on-the-fly computation, it can be then added to the Path Configuration Plan.

The path computation process is triggered after having received a path request (with the related privacy policy), from a data transport agent of a controlling device CD or from a privacy node controller of another controlling node CN.

In case of a set of privacy node controllers included in network nodes forming a path between a source privacy data transport agent PDTA and a destination privacy data transport agent PDTA, if a privacy node controller PNC satisfies a privacy policy, two actions can be executed:
a) If the privacy node controller PNC is directly connected to the destination privacy data transport agent PDTA, it registers the appropriate path to the privacy data transport agent PDTA and sends back the path information (e.g. port, address, protocol) to the privacy data transport agent PDTA from which it received the path request.
b) If the privacy node controller PNC is not directly connected to the destination privacy data transport agent PDTA, it transfers the path request to the next privacy node controller PNC. If it receives a positive response from the next privacy node controller PNC, it registers the path to this privacy node controller PNC and sends back the path information to the requestor, otherwise, it returns a path error message (e.g. next hop not compliant with policy).

If the privacy node controller PNC does not satisfy a privacy policy, it sends back a path error message to the requestor (e.g. not compliant with policy).

If no available path completely satisfies the privacy policy, proposals can be made to the path requestor PR of a controlling device CD either to slightly modify the privacy constraints or to delay the sending until a path compliant with policy constraints is released.

The node path tracer NPT is able to keep information about the data and the path used for transferring and receiving the data requiring transfer tracing.

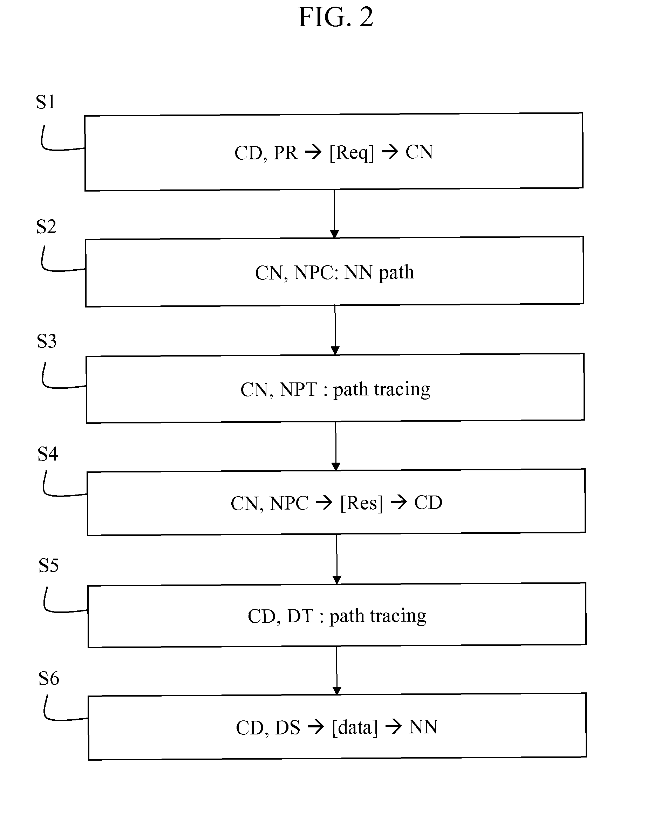

With reference to FIG. 2, a method for enforcing privacy policies according to one embodiment of the invention comprises steps S1 to S6 executed within the communication system.

In step S1, a source controlling device CD is hosting sensitive data that are associated with a privacy policy and that have to be sent toward a destination controlling device through different network nodes NN in the telecommunication network TN.

The path requestor PR of the controlling device CD sends a request Req to a controlling node CN, the request containing the privacy policy associated with the sensitive data to be sent (if authorized) and an identifier of the destination device.

For example, the identifier of the destination device is an address of this latter.

At step S2, the node path computer NPC of the controlling node CN receives the request Req and extracts the privacy policy contained in this latter.

The node path computer NPC determines the path to the destination device based on the privacy policy and the identifier of the destination device. Especially, it identifies a network node NN satisfying the privacy policy and able to forward the sensitive data from the source controlling device to the destination controlling device.

The node path computer NPC registers the appropriate path to the destination privacy data transport agent PDTA.

The path can correspond to at least an address and a port of a network node satisfying the privacy policy.

In one embodiment, the node path computer NPC selects a path in predefined paths composing a Path Configuration Plan. In this case, all privacy node controllers can be independent or handled by a centralized entity.

In another embodiment, the node path computer NPC determines on-the-fly the path by interrogating another controlling node. In this case, each privacy node controller can be independent maintaining its owned path state information, like in MPLS control architecture.

In said another embodiment, step S2 can be repeated for a controlling node CN requesting a path to another controlling node. If the controlling node does not control a network node NN directly connected to the destination privacy data transport agent PDTA of the destination controlling device, it transfers the path request to a next controlling node CN. If it receives a positive response from the next network controlling node CN, the response including path information on a privacy satisfying network node NN, it registers the path to this network node NN and sends back the path information to the requestor.

At optional step S3, the node path tracer NPT keeps information about the sensitive data and the path to carry those data for tracing purpose.

At step S4, the node path computer NPC sends a response Res back to the path requestor PR of the controlling device CD, the response containing information about the path, including for example a port and an address of the network node, and a protocol to be used.

If the controlling node is included in the network node NN, information on the path can be limited to the port.

During steps S1 to S4, the path computer PC can negotiate the privacy policy if the privacy policy cannot be completely satisfied by the network node (for instance data transfers can be delayed until a path compliant with privacy constraints will be available).

At optional step S5, the data tracer DT keeps information about the data and the path used for transferring and receiving the data requiring transfer tracing.

At step S6, the data sender DS sends the sensitive data according to the path satisfying the privacy policy, e.g. to the right address and port of the network node NN, obtained by the path requestor PR.

Then the sensitive data are transported through the right ports of the concerned network nodes and received by the data receiver DR of the destination controlling device. The data receiver DR can optionally check whether the sensitive data come from an appropriate path according to the privacy policy related to the sensitive data.

The invention allows to support different types of privacy policy for data transport within the cloud networks as:
- the data should not cross the network nodes located in certain countries or areas (or the data should only cross nodes of certain countries or areas),
- the data should not be transported by certain network operators,
- the data should cross only network nodes having a certain level of security,
- the data should not be stored in a cache (or in the caches of certain countries/operators),
- the data should not be transported during a certain time period (e.g., during certain hours/days, after a given date),
- the paths/routes used by the data should be traced if requested (to provide guarantees by monitoring data migration, remote virtual machine usages, access information for possible later data usage forensics/audit).

The invention also allows to support privacy policy associated to (i) the data itself (for instance a file containing sensitive data may have a dedicated privacy policy), (ii) an application (the policy will be applied to all the data exchanged by this application), (iii) a virtual machine (the policy will be applied to all the data exchanged by this virtual machine), (iv) a group of virtual machines (e.g., all the virtual machines of a branch office of a company) or a physical server/host of the cloud.

In a first example wherein a connection has to be established between two virtual machines provisioned on two distant servers (hosts) respectively, one embodiment of the invention is to extend a (transport network) signaling protocol such as RSVP-TE to request a connection with Privacy constraints.

The signaling interface between the client (a virtual machine or a physical server) and the telecommunication network allows dynamically requesting the establishment of a connection across the telecommunication network. The messages exchanged between the host sender / host receiver and the cloud network according to the signaling protocols establish the end-to-end connection services.

In the context of this invention, a client device, like a virtual machine, requires the telecommunication network carrying its sensitive data to comply with the privacy associated to the sensitive data.

For example, the client does not want the sensitive data to go outside a specific area (for example the client data flows should not go outside USA). The signaling interface between the client devices and network nodes is based on RSVP-TE. A POLICY_DATA object is carried by each RSVP messages and it contains privacy information. Any privacy data transport agent PDTA of a controlling device and privacy node controller PNC of a network node NN can enforce the privacy parameters of a POLICY_DATA object, even when intermediate telecommunication network nodes may not even be aware of policy data objects.

The exchange of POLICY_DATA objects between privacy node controllers along the data path, supports the generation of consistent end-to-end policies. Such privacy policies are deployed across multiple administrative domains when edge nodes manipulate and translate POLICY_DATA objects according to established agreements between the telecommunication network and its connected clients.

For each private data flow, the privacy data transport agent PDTA configures the ITU carrier code parameter and unique access point code of a CALL_ID object to be integrated in POLICY_DATA object.

In a second embodiment, all privacy node controllers are handled by a Centralized Network Controller software. The network controller relies on one or several virtualized network control functions defined as «Privacy aware Control programs» to enforce privacy rules on the paths configured over data transport networks. And each control program (acting as a Software Defined Networking application) uses a defined software API to be executed by a centralized Network Controller. The centralized network controller uses a common protocol interface to command the Network nodes involved for the configuration of the paths compliant with privacy policies (for instance the common protocol interface is based on OpenFlow).

The centralized network controller configures the privacy node controllers for every group of privacy constrained data flows. A Centralized network controller brings an execution environment, programmability, flexibility and coordination between several Privacy aware Control programs. Each privacy aware control program plugged in a Network Controller is executed without interfering with the privacy policies of the other Privacy aware Control programs.

The invention described here relates to a method, a device, and a node for enforcing in the network the privacy policies associated with carrying sensitive data. According to one implementation of the invention, the steps of the invention are determined by the instructions of a computer program incorporated into a device, such as the controlling device CD and a node, such as the controlling node CN. The program comprises program instructions which, when said program is loaded and executed within the device or the node, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for enforcing privacy policy related to sensitive data that are stored in a device (CD) and are to be sent to a destination device within a telecommunication network (TN), comprising the following steps in said device (CD):
sending (S1) a request (Req) to a controlling node (CN), the request containing an identifier of the destination device and the privacy policy associated with the sensitive data to be sent,
receiving (S4) a response (Res) sent from the controlling node, the response containing information on a path to a network node able to transmit sensitive data to the destination device, the path satisfying the privacy policy.

2. A method according to claim 1, wherein the controlling node (CN) is included in the network node (NN).

3. A method according to claim 1 or 2, wherein the controlling node (CN) determines the path to the destination device based on the privacy policy and the identifier of the destination device.

4. A method according to any of claims 1 to 3, wherein the path includes one of a port and an address of the network node (NN), and a protocol to be used.

5. A method according to any of claims 1 to 4, wherein the identifier of the destination device is an address of the destination device.

6. A method according to any of claims 1 to 5, wherein the privacy policy describes constraints about the transport of the sensitive data.

7. A method according to any of claims 1 to 6, wherein the device sends the sensitive data to the network node (NN) according to the path satisfying the privacy policy.

8. A method according to any of claims 1 to 7, wherein the device keeps information about the sensitive data and the corresponding path to be used for sending the sensitive data and is able to check whether sensitive data are sent to a path according to the privacy policy associated with the sensitive data.

9. A method according to any of claims 1 to 8, wherein the controlling node negotiates the privacy policy if the privacy policy cannot be completely satisfied by the network node.

10. A method according to any of claims 1 to 9, wherein the request (Req) is forwarded from the controlling node (CN) to another controlling node, the controlling node (CN) receiving another response from said another controlling node containing information on a path to another network node able to transmit sensitive data to the destination device, the path satisfying the privacy policy.

11. A method according to any of claims 1 to 9, wherein the controlling node (CN) selects the path in predefined paths composing a Path Configuration Plan.

12. A method for enforcing privacy policy related to sensitive data that are stored in a device and are to be sent to a destination device within a telecommunication network (TN), comprising the following steps in a controlling node (CN):
receiving (S1) a request (Req) sent from the device (CD), the request containing an identifier of the destination device and the privacy policy associated with the sensitive data to be sent,
sending (S4) a response (Res) to the device (CD), the response containing information on a path to a network node able to transmit sensitive data to the destination device, the path satisfying the privacy policy.

13. A device (CD) for enforcing privacy policy related to sensitive data that are stored in the device and are to be sent to a destination device within a telecommunication network (TN), the device comprising:
means (PR) for sending a request (Req) to a controlling node (CN), the request containing an identifier of the destination device and the privacy policy associated with the sensitive data to be sent,
means (PR) for receiving a response (Res) sent from the controlling node, the response containing information on a path to a network node able to transmit sensitive data to the destination device, the path satisfying the privacy policy.

14. A controlling node (CN) for enforcing privacy policy related to sensitive data that are stored in a device and are to be sent to a destination device within a telecommunication network (TN), the controlling node comprising:
means (NPC) for receiving a request (Req) sent from the device (CD), the request containing an identifier of the destination device and the privacy policy associated with the sensitive data to be sent,
means (NPC) for sending a response (Res) to the device (CD), the response containing information on a path to a network node able to transmit sensitive data to the destination device, the path satisfying the privacy policy.

15. A computer program capable of being implemented within a device (CD) for enforcing privacy policy related to sensitive data that are stored in a device and are to be sent to a destination device within a telecommunication network (TN), said program comprising instructions which, when the program is loaded and executed within said device, carry out the following steps:
sending (S1) a request (Req) to a controlling node (CN), the request containing an identifier of the destination device and the privacy policy associated with the sensitive data to be sent,
receiving (S4) a response (Res) sent from the controlling node, the response containing information on a path to a network node able to transmit sensitive data to the destination device, the path satisfying the privacy policy.

16. A computer program capable of being implemented within a controlling node (CN) for enforcing privacy policy related to sensitive data that are stored in a device and are to be sent to a destination device within a telecommunication network (TN), said program comprising instructions which, when the program is loaded and executed within said controlling node, carry out the following steps:
receiving (S1) a request (Req) sent from the device (CD), the request containing an identifier of the destination device and the privacy policy associated with the sensitive data to be sent,
sending (S4) a response (Res) to the device (CD), the response containing information on a path to a network node able to transmit sensitive data to the destination device, the path satisfying the privacy policy.
